Europäisches Patentamt

European Patent Office

Office européen des brevets

(11) Numéro de publication: **0 346 254**
**A1**

## (12) DEMANDE DE BREVET EUROPEEN

(21) Numéro de dépôt: **89440043.1**

(22) Date de dépôt: **10.05.89**

(51) Int. Cl.⁴: **G 07 F 17/28**
G 07 F 5/18, H 04 N 7/16

(30) Priorité: **10.05.88 FR 8806504**

(43) Date de publication de la demande:
**13.12.89 Bulletin 89/50**

(84) Etats contractants désignés:
**AT BE CH DE ES GB GR IT LI LU NL SE**

(71) Demandeur: **Kuhn, Jean Marie**
**1, rue des Jasmins**
**F-57116 Niderviller (FR)**

**Houdou, Michel**
**37, rue du Docteur Guichard**
**F-49000 Angers (FR)**

(72) Inventeur: **Kuhn, Jean Marie**
**1, rue des Jasmins**
**F-57116 Niderviller (FR)**

**Houdou, Michel**
**37, rue du Docteur Guichard**
**F-49000 Angers (FR)**

(74) Mandataire: **Nuss, Pierre et al**
**10, rue Jacques Kablé**
**F-67000 Strasbourg (FR)**

(54) Dispositif central d'autorisation de fonctionnement individuel de plusieurs appareils de location dispersés.

(57) La présente invention concerne un dispositif central d'autorisation de fonctionnement individuel de plusieurs appareils de location dispersés, caractérisé en ce qu'il est essentiellement constitué par une borne de commande centralisée (1) munie d'un dispositif (2) de commande d'autorisation de fonctionnement et d'au moins un moyen (3) de paiement d'une location et par des modules (4) de commande individuelle affectés chacun à un appareil, les signaux issus de la borne de commande étant transmis aux modules par l'intermédiaire d'un câble coaxial, d'un câble secteur, d'une liaison téléphonique, d'un émetteur haute fréquence, ou encore par fibres optiques.

Fig-1

EP 0 346 254 A1

## Description

### Dispositif central d'autorisation de fonctionnement individuel de plusieurs appareils de location dispersés

La présente invention concerne le domaine de la gestion du fonctionnement d'appareils individuels, en particulier d'appareils de location, dispersés chez un même utilisateur et a pour objet un dispositif central d'autorisation de fonctionnement individuel de tels appareils.

Actuellement, la gestion du fonctionnement d'appareils individuels, en particulier d'appareils de location, notamment de téléviseurs dans des collectivités, s'effectue généralement, soit par paiement d'une somme forfaitaire pour une durée prédéterminée d'utilisation, soit au moyen d'un dispositif de péage enclenchant et déclenchant automatiquement lesdits appareils.

Les modes de gestion connus actuellement sont assez difficiles à mettre en oeuvre, du fait qu'ils nécessitent des visites périodiques de personnels qualifiés permettant la prolongation d'un service dans le cas d'un paiement forfaitaire mensuel, hebdomadaire ou quotidien, ou pour reprendre lesdits appareils, soit, dans le cas d'appareils munis d'un dispositif de péage un vidage périodique du monnayeur dudit dispositif.

Le problème de la location d'appareils de ce type est particulièrement crucial dans des établissements hospitaliers dans lesquels la location peut être réalisée, soit par une installation d'office d'un téléviseur dans chaque chambre, soit par une installation à la demande.

Dans le premier cas, le paiement est souvent réalisé au moyen d'un monnayeur intégré au téléviseur, obligeant l'utilisateur à se munir de pièces de monnaie adéquates et présentant un risque important de vandalisme. Dans ce cas, la location peut également être réali sée par réglement préalable, l'autorisation de fonctionnement étant alors assurée au moyen d'une clé d'actionnement du téléviseur, délivrée lors du réglement. Cependant, ce mode de location induit une dépendance de l'utilisateur vis-à-vis du service de location qui doit être disponible lorsque le désir de louer se manifeste.

Dans le deuxième cas, le téléviseur est installé dans la chambre de l'utilisateur lorsque ce dernier en fait la demande, ce qui entraîne d'importants inconvénients au niveau de l'organisation du service hospitalier, de l'horaire de travail du service de location, qui ne correspond pas toujours à l'heure où l'utilisateur émet son souhait et du paiement de la location.

En outre, les formules de location existant actuellement sont relativement rigides en ce qui concerne les changements éventuels du lieu d'utilisation d'un téléviseur, par exemple dans le cas d'un changement de chambre.

La présente invention a pour but de pallier ces inconvénients.

Elle a, en effet, pour objet un dispositif central d'autorisation de fonctionnement individuel de plusieurs appareils de location dispersés, caractérisé en ce qu'il est essentiellement constitué par une borne de commande centralisée munie d'un dispositif de commande d'autorisation de fonctionnement et d'au moins un moyen de paiement d'une location et par des modules de commande individuelle affectés chacun à un appareil, les signaux issus de la borne de commande étant transmis aux modules par l'intermédiaire d'un câble coaxial, d'un câble secteur, d'une liaison téléphonique, d'un émetteur haute fréquence, ou encore par fibres optiques.

L'invention sera mieux comprise, grâce à la description ci-après, qui se rapporte à un mode de réalisation préféré, donné à titre d'exemple non limitatif, et expliqué avec référence aux dessins schématiques an nexés, dans lesquels :

la figure 1 est une vue en élévation frontale du dispositif conforme à l'invention ;

la figure 2 est un schéma par blocs de la borne de commande centralisée, et

la figure 3 est un schéma par blocs d'un module de commande individuelle.

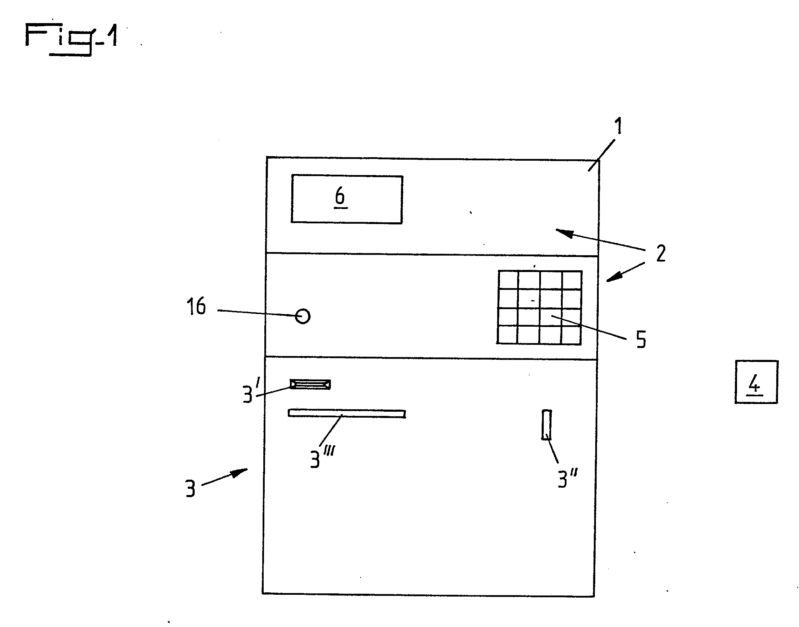

Conformément à l'invention, et comme le montre plus particulièrement, à titre d'exemple, la figure 1 des dessins annexés, le dispositif central d'autorisation de fonctionnement individuel de plusieurs appareils de location dispersés est essentiellement constitué par une borne 1 de commande centralisée munie d'un dispositif 2 de commande d'autorisation de fonctionnement et d'au moins un moyen 3 de paiement d'une location et par des modules 4 de commande individuelle affectés chacun à un appareil, les signaux issus de la borne de commande 1 étant transmis aux modules 4 par l'intermédiaire d'un câble coaxial, d'un câble secteur, d'une liaison téléphonique, d'un émetteur haute fréquence, ou encore par fibres optiques.

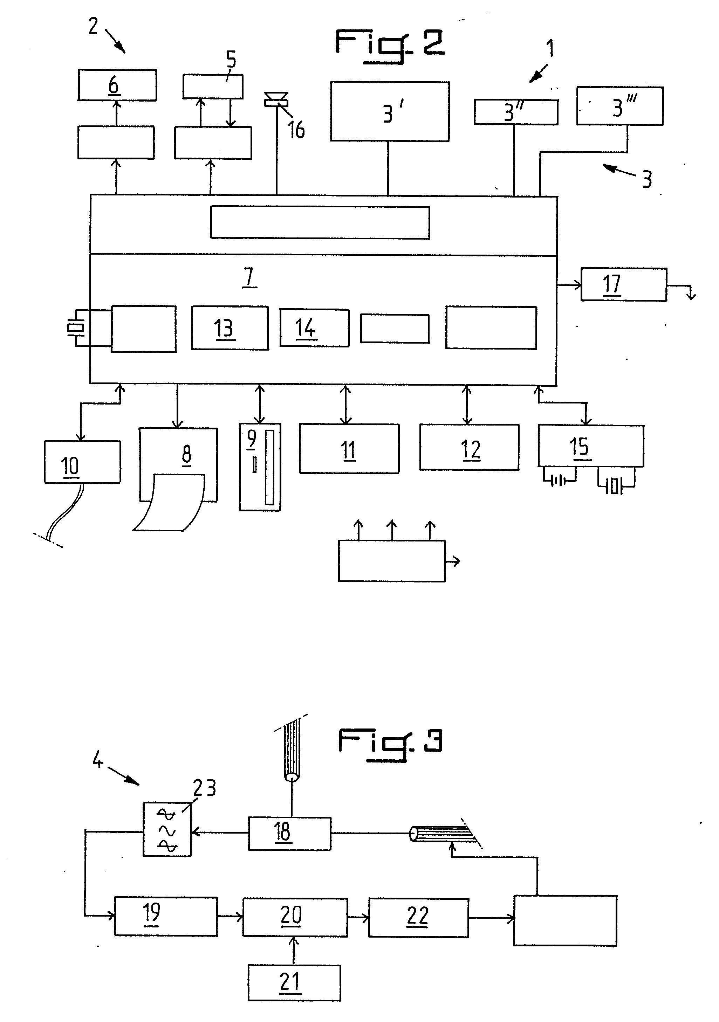

Le dispositif 2 de commande d'autorisation de fonctionnement est avantageusement constitué par un clavier alphanumérique 5 coopérant avec un dispositif d'affichage 6 du type à cristaux liquides, le clavier 5 et le dispositif 6 étant reliés à une unité centrale de gestion 7 disposée dans la borne 1 (figures 1 et 2).

Le moyen 3 de paiement d'une location peut être sous forme d'un lecteur de carte bancaire et/ou de carte à puce 3' et/ou d'un monnayeur 3" et/ou d'une imprimante de chèque 3''', est également relié à l'unité centrale de gestion 7, et est monté sur la face avant de la borne 1 (figures 1 et 2).

Le dispositif conforme à l'invention peut, en outre, être connecté à une imprimante 8, à un micro-ordinateur avec lecteur de disquettes 9, ainsi qu'à un modulateur-démodulateur 10 permettant sa commande par l'intermédiaire d'un poste de contrôle central au moyen d'une ligne téléphonique et son unité centrale 7 peut être pourvue de mémoires embrochables complémentaires à mémoire morte programmée 11 ou à mémoire morte programmable effaçable non volatile 12 servant de clé d'accès aux mémoires vives 13 et mortes 14 de l'unité centrale 7, une horloge embrochable 15 formant un bloc de sauvegarde pour ladite unité centrale 7 (figure 2).

Selon une autre caractéristique de l'invention et comme le montre la figure 2, la borne de commande 1 est pourvue d'un avertisseur sonore et/ou lumineux 16 de controle de fonctionnement relié à l'unité centrale 7 et commandé par cette dernière qui délivre, à sa sortie, par l'intermédiaire d'un modulateur 17, un signal d'actionnement des modules 4 de commande individuelle, ce signal étant transmis, soit par un câble secteur, soit par un câble coaxial, soit par l'intermédiaire d'une liaison téléphonique, soit par un émetteur haute fréquence à fréquences multiples (non représenté), soit encore par fibres optiques.

Chaque module 4 de commande individuelle (figure 3) est constitué par un boîtier de séparation 18, dans lequel est logé un démodulateur 19 du signal reçu par l'intermédiaire du câble coaxial, du câble secteur ou d'un récepteur haute fréquence (non représenté), par un bloc de reconnaissance de code 20 comparant le signal issu du démodulateur 19 à un code spécifique affecté à l'appareil à commander et contenu dans une mémoire 21 lue par ledit bloc 20, par une temporisation 22 de déclenchement du fonctionnement dudit appareil à commander et par une arrivée 23 de courant secteur mettant ledit appareil sous tension par l'intermédiaire d'un relais ou autre.

L'unité centrale 7 délivre les autorisations de fonctionnement aux appareils pour lesquels elle a enregistré un paiement. Cette autorisation est transmise aux modules de commande 4 disposés chacun dans un appareil et qui décodent les ordres issus de l'unité centrale 7, déclenchant la possibilité de fonctionnement de l'appareil correspondant.

Le dispositif conforme à l'invention fonctionne de la manière suivante :

Le dispositif d'affichage 6 de la borne 1, relié à l'unité centrale 7, affiche des questions auxquelles l'utilisateur répond en indiquant les coordonnées de sa chambre, la durée du séjour, etc... L'unité centrale 7 calcule alors le prix à payer et l'affiche sur le dispositif 6. Ce prix peut être modulé de manière dégressive, selon un programme introduit au moyen du clavier 5 dans les mémoires de l'unité centrale 7. Dès affichage du prix, l'utilisateur peut procéder au paiement au moyen d'une carte bancaire ou d'une carte à puce insérée dans le lecteur de carte 3', de monnaie introduite dans le monnayeur 3'' ou d'un chèque introduit dans l'imprimante de chèque 3'''. L'unité centrale 7 adresse alors les ordres de fonctionnement à l'appareil dont l'autorisation de fonctionnement a été requise par l'intermédiaire du modulateur 17 et, soit du câble coaxial d'antenne, soit du câble secteur, soit par une liaison téléphonique, soit au moyen d'un émetteur haute fréquence à fréquences multiples, soit encore par fibres optiques. Le signal issu de l'unité centrale 7 est traité dans le module 4 de commande individuelle au moyen du démodulateur 19 et du bloc de reconnaissance de codes 20 qui le compare à celui contenu dans la mémoire 21. La correspondance du code déclenche la temporisation 22 de mise sous tension de l'appareil par actionnement du relais équipant l'arrivée de courant secteur 23. La temporisation 22 est avantageusement, de manière connue, une temporisation préréglée qui est réinitialisée par les signaux de commande issus de l'unité centrale 7. A la fin du temps de location prédéterminé par l'utilisateur, l'unité centrale 7 cesse l'émission de signaux d'actionnement, et le fonctionnement de l'appareil est arrêté après l'arrivée à terme de la temporisation 22.

Grâce à l'invention, il est possible de réaliser une installation définitive d'appareils de location, notamment de téléviseurs, dans des chambres, donc leur fixation, et d'éviter ainsi les risques de vol. En outre, l'appareil ne contenant pas d'argent, un endommagement dû à des actes de vandalisme peut également être évité.

L'invention permet également une adaptation plus simple aux désirs de l'utilisateur, qui peut procéder à tout moment à la mise en service de l'appareil qui lui est affecté et commander sa durée de fonctionnement. Du fait d'une gestion possible du crédit de temps au moyen de l'unité centrale 7 ou d'un micro-ordinateur avec lecteur de disquettes 9 ou encore par l'intermédiaire du modulateur-démodulateur 10 à partir d'un poste de contrôle central, un changement de chambre de l'utilisateur n'entraîne pas une perte du crédit de temps qui peut être reporté à l'appareil affecté à la nouvelle chambre. De plus, le dispositif conforme à 1 invention n'entraîne aucun désagrément tel qu'une perturbation du service ou du confort de l'utilisateur résultant d'une installation d'appareils.

Enfin, du fait même de la gestion d'un ensemble d'appareils au moyen d'une unité centrale 7, ce dispositif permet de compléter les programmes disponibles sur lesdits appareils par des programmes internes ou autres.

La prévision d'une imprimante 8 permet la tenue d'un journal sur lequel sont enregistrés tous les mouvements effectués par le dispositif, ainsi, qu'éventuellement, la délivrance de relevés spécifiques à chaque utilisateur.

Enfin, le micro-ordinateur 9 avec lecteur de disquettes équipant l'unité centrale 7 peut noter tous les mouvements du dispositif et permet également la réalisation d'un auto-test ou d'un auto-diagnostic de l'ensemble du dispositif, ainsi que la télémaintenance et l'interrogation à distance par des lignes téléphoniques normales en passant par le modulateur-démodulateur 10.

L'invention a été décrite plus particulièrement en application avec des appareils tels que des téléviseurs, mais peut également être appliquée à la commande d'autorisation de fonctionnement d'autres appareils, soit en location, donc avec prévision d'un paiement préalable, soit encore en régie, l'autorisation pouvant alors être donnée par simple reconnaissance d'un code.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif central d'autorisation de fonctionnement individuel de plusieurs appareils de location dispersés, caractérisé en ce qu'il est essentiellement constitué par une borne de commande centralisée (1) munie d'un dispositif (2) de commande d'autorisation de fonctionnement et d'au moins un moyen (3) de paiement d'une location et par des modules (4) de commande individuelle affectés chacun à un appareil, les signaux issus de la borne de commande étant transmis aux modules par l'intermédiaire d'un câble coaxial, d'un câble secteur, d'une liaison téléphonique, d'un émetteur haute fréquence, ou encore par fibres optiques.

2. Dispositif, suivant la revendication 1, caractérisé en ce que le dispositif (2) de commande d'autorisation de fonctionnement est avantageusement constitué par un clavier alphanumérique (5) coopérant avec un dispositif d'affichage (6) du type à cristaux liquides, le clavier (5) et le dispositif (6) étant reliés à une unité centrale de gestion (7) disposée dans la borne (1).

3. Dispositif, suivant l'une quelconque des revendications 1 et 2, caractérisé en ce que le moyen (3) de paiement d'une location est sous forme d'un lecteur de carte bancaire et/ou de carte à puce (3') et/ou d'un monnayeur (3″) et/ou d'une imprimante de chèque (3‴), est également relié à l'unité centrale de gestion (7), et est monté sur la face avant de la borne (1).

4. Dispositif, suivant l'une quelconque des revendications 1 et 2, caractérisé en ce qu'il est, en outre, connecté à une imprimante (8), à un micro-ordinateur avec lecteur de disquettes (9), ainsi qu'à un modulateur-démodulateur (10) permettant sa commande par l'intermédiaire d'un poste de contrôle central au moyen d'une ligne téléphonique et son unité centrale (7) est pourvue de mémoires embrochables complémentaires à mémoire morte programmée (11) ou à mémoire morte programmable effaçable non volatile (12) servant de clé d'accès aux mémoires vives (13) et mortes (14) de l'unité centrale (7), une horloge embrochable (15) formant un bloc de sauvegarde pour ladite unité centrale (7).

5. Dispositif, suivant l'une quelconque des revendications 1 à 4, caractérisé en ce que la borne de commande (1) est pourvue d'un avertisseur sonore et/ou lumineux (16) de controle de fonctionnement relié à l'unité centrale (7) et commandé par cette dernière qui délivre, à sa sortie, par l'intermédiaire d'un modulateur (17), un signal d'actionnement des modules (4) de commande individuelle, ce signal étant transmis, soit par un câble secteur, soit par un câble coaxial, soit par l'intermédiaire d'une liaison téléphonique, soit par un émetteur haute fréquence à fréquences multiples, soit encore par fibres optiques.

6. Dispositif, suivant la revendication 1, caractérisé en ce que chaque module (4) de commande individuelle est constitué par un boîtier de séparation (18), dans lequel est logé un démodulateur (19) du signal reçu par l'intermédiaire du câble coaxial, du câble secteur ou d'un récepteur haute fréquence, par un bloc de reconnaissance de code (20) comparant le signal issu du démodulateur (19) à un code spécifique affecté à l'appareil à commander et contenu dans une mémoire (21) lue par ledit bloc (20), par une temporisation (22) de déclenchement du fonctionnement dudit appareil à commander et par une arrivée (23) de courant secteur mettant ledit appareil sous tension par l'intermédiaire d'un relais ou autre.

Fig.1

# Fig. 2

2

6

5

16

1

3'

3"

3'''

3

7

17

13

14

10

8

9

11

12

15

# Fig. 3

4

23

18

19

20

22

21

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | WO-A-8 505 524  (K. LIEBE) <br> * Résumé; figures 1-3; page 3, ligne 4 - page 9, ligne 14 * | 1-3 | G 07 F   17/28 <br> G 07 F    5/18 <br> H 04 N    7/16 |
| A | | 4-6 | |
| | --- | | |
| A | US-A-4 700 296  (R.A. PALMER) <br> * Résumé; figures 1,2,6; colonne 1, lignes 37-61; colonne 5, ligne 47 - colonne 6, ligne 33 * | 1,2,4-6 | |
| | --- | | |
| A | WO-A-8 304 154  (TELEASE) <br> ----- | | |

DOMAINES TECHNIQUES
RECHERCHES (Int. Cl.4)

G 07 F
H 04 N

Le présent rapport a été établi pour toutes les revendications

| Lieu de la recherche | Date d'achèvement de la recherche | Examinateur |
|---|---|---|
| LA HAYE | 21-08-1989 | DAVID J.Y.H. |

EPO FORM 1503 03.82 (P0402)